# EUROPEAN PATENT SPECIFICATION

(11) **EP 0 309 146 B1**
(45) Date of publication and mention of the grant of the patent: **13.01.1993**
(21) Application number: 88308513.6
(22) Date of filing: 15.09.1988
(51) Int. Cl.: B41J 2/16, B41J 2/14

(54) **Manufacture of nozzles for ink jet printers**
Verfahren zur Herstellung von Düsen für Tintenstrahldrucker
Procédé de fabrication de buses pour imprimantes à jet d'encre

(30) Priority: 19.09.1987 GB 8722085
(43) Date of publication of application: 29.03.1989
(73) Proprietor: XAAR LIMITED, Cambridge CB4 4FD (GB)
(72) Inventor: Paton, Anthony David, Longstanton St Michael Cambridge (GB); Temple, Stephen, Cambridge CB3 0LN (GB); Michaelis, Alan John, Itasca Illinois 60143 (US)
(74) Representative: Coleman, Stanley

(56) References cited:
- DE-A- 3 612 846
- GB-A- 2 022 021
- US-A- 4 644 126
- PATENT ABSTRACTS OF JAPAN, vol. 10, no. 189 (M-494)[2245], 3rd July 1986, page 50 M 494; JP-A-61 32 761 (NEC CORP.) 15-02-1986
- IBM TECHNICAL DISCLOSURE BULLETIN, vol. 25, no. 8, January 1983, page 4371, new York, US; J.I. CROWLEY et al.: "Nozzles for INK jet printers"
- PATENT ABSTRACTS OF JAPAN, vol. 7, no. 204, (E-197)[1349], 9th September 1983, page 161 E 197; & JP-A-58 103 140 (FUJITSU K.K.) 20-06-1983

## Description

### Cross-Reference to Related Applications

The subject matter of this application is related to the subject matter of European Patents No. 277703 and No. 278590 published on 10.08.88 and 17.08.88 respectively both entitled Droplet Deposition Apparatus.

### Background of the Invention

The present invention generally relates to nozzles for ink jet printers and their method of manufacture, and particularly concerns the manufacture of nozzle plates having a multiplicity of individual nozzles and printheads with nozzle plates secured thereto.

It had been suggested that certain plastics, particularly low surface energy plastics such as polyethylene, polypropylene or fluorinated polymers be employed in the manufacture of nozzles for ink jet printers. See, for example, IBM Technical Disclosure Bulletin 25.8 Jan. 1983, p4371. The claimed advantage of using such materials is that the outer face, having a relatively low surface energy inhibits the spread of aqueous inks in particular. But an associated disadvantage of such nozzle materials is that the ink has an adverse contact angle to and therefore does not wet the surface of the nozzle bore. The suction which draws ink to the exterior surface of the nozzle during operation of the printer is consequently diminished or absent. This suction contributes to ink drop acceleration during ejection of a drop of ink in a drop-on-demand printer and also assists the ink replenishment process which refills the nozzle with ink after printing. For these reasons, nozzles made of low energy polymer are not well suited for use in drop-on-demand printers.

It has been discovered, however, that other plastics, which have not heretofore been proposed for the purpose, are particularly well suited for the manufacture of nozzles for ink jet printers, particularly drop-on-demand ink jet printers. In addition to the selection of an appropriate material, a suitable technology must also be provided to form the nozzles in the material. This technology would preferably be capable of simultaneously forming multiple nozzles in a nozzle plate or the like, wherein the nozzles are in precise registration with the ink ejection channels of the printhead of an ink ejection printer. Laser ablation is a technology particularly well suited for these purposes. The controlled ablation of solid materials using a pulsed UV laser is well known in the art. See, for example, Japanese Application No. 59-154826 which discloses the use of a high energy beam such as a laser to form nozzles in a resin film. Despite this disclosure, the use of lasers in the formation of printhead nozzles is not widely practiced. It is believed that this is at least partially due to the failure of the prior art to disclose techniques for forming ink jet nozzles of appropriate configuration.

It would additionally be highly advantageous to provide a continuous, positive ink flow through the nozzles of a drop-on-demand ink jet printer during printing. Applicants are unaware of any prior art disclosures teaching the use of such positive flow systems.

European Patent No. 277703 discloses a drop-on-demand ink jet printhead comprising a printhead body, a nozzle plate secured to said body and an array of ink channels in said body respectively communicating with said nozzles, each of said nozzles having an inlet in a face of said plate adjacent said body, an outlet of smaller cross-section than the inlet thereof in a face of said plate opposite the face in which said inlets are disposed and a nozzle bare which converges from the nozzle inlet to the nozzle outlet.

It is thus an object of the present invention to provide a novel nozzle for an ink jet printhead and a method for manufacturing the nozzle wherein the nozzle is formed in a tapered configuration especially well suited for use in association with the printhead of an ink jet printer, particularly a drop-on-demand ink jet printer.

It is another object of one form of the invention to provide a method for manufacturing an ink jet printhead having a nozzle plate formed with a multiplicity of individual accurately formed and directed nozzles.

The present invention consists in a method of making a nozzle plate for an ink jet printhead comprising directing a high energy beam at a plate and effecting relative rocking motion between said plate and said beam thereby to form a nozzle in said plate which tapers in a direction opposed to that of said beam.

The invention further consists in a method of making a nozzle plate for an ink jet printhead comprising directing a high energy beam at a plate of polymer material secured to an end of an array of ink channels of an ink jet printhead body, limiting the incidence on said plate of said beam to a plurality of locations so as to simultaneously form respective nozzles in communication with said channels and effecting relative rocking motion between said beam and said printhead so that each of said nozzles tapers inwardly in the direction opposed to that of said beam.

The invention also consists in a nozzle plate for an ink jet printhead formed with a nozzle therein having an inlet at one face of said plate and an outlet of smaller cross-sectional area than said inlet at a face of said plate opposite that in which said nozzle inlet is disposed, said nozzle further having a nozzle bore which converges from said inlet to said outlet, characterised in that said nozzle plate is formed from polymer and said nozzle bore is formed by a high energy beam directed at the face of said plate in which said outlet is disposed whilst effecting relative rocking motion between said plate and said beam.

The invention further consists in a nozzle plate for a drop-on-demand ink jet printhead formed with a row of nozzles therein having respective inlets disposed in a face of said plate which when said plate is located on said printhead faces said printhead, respective outlets which are of smaller cross-sectional area than said inlets and are disposed in a face of said plate opposite that in which said inlets are disposed and respective nozzle bores between said inlets and said outlets which converge each from the inlet to the outlet thereof, characterised in that said nozzle plate is formed from polymer and said nozzle bores are formed by directing a high energy beam at said face of said plate in which said outlets are formed while effecting relative rocking motion between said beam and said plate.

The invention in addition consists in a drop-on-demand ink jet printhead comprising a printhead body formed with an ink channel, a nozzle plate secured to said body and a nozzle formed in said nozzle plate and having an inlet in a face of said plate adjacent said body and an outlet of smaller cross-section than said inlet disposed in a face of said plate opposite the face in which said inlet is disposed, said nozzle further having a nozzle bore which converges from said inlet to said outlet, characterized in that said nozzle plate is formed from polymer and said nozzle bore is formed by directing a high energy beam at said plate and effecting relative rocking motion between said printhead and said plate.

The invention also consists in a drop-on-demand ink jet printhead comprising a printhead body, a nozzle plate secured to said body and an array of ink channels in said body respectively communicating with said nozzles, each of said nozzles having an inlet in a face of said plate adjacent said body, an outlet of smaller cross-section than the inlet thereof in a face of said plate opposite the face in which said inlets are disposed and a nozzle bore which converges from the nozzle inlet to the nozzle outlet, characterized in that said nozzle plate is formed from polymer and said bores are formed in said plate by directing a high energy beam at the face of said plate in which said outlets are disposed whilst effecting relative rocking motion between said plate and said beam.

Advantageously, the nozzle bores of the nozzle plate are formed by and have increased surface energy imparted thereto by an excimer laser.

### Brief Description of the Drawings

These and other objects and advantages of the invention will be apparent on reading the following description in conjunction with the drawings, in which:
FIG. 1 diagramatically illustrates a process for manufacturing a nozzle plate for an ink jet printhead according to the present invention;
FIG.2 is an enlarged perspective view of a portion of the arrangement illustrated in FIG. 1, and which in particular shows a method by which the nozzles formed in the plate of FIG. 1 are undercut according to the invention;
FIG. 3 is an enlarged perspective view similar to FIG.2 and showing the undercut nozzles formed in the nozzle plate;
FIG. 4 is a perspective view of a nozzle plate manufactured according to the invention including an ink trough in the external face of the nozzle plate;
FIG. 5 is a diagrammatic elevation view illustrating the operation of a drop-on-demand ink jet printer having a nozzle plate with an external ink trough as shown in FIG. 4, and a system for maintaining a positive ink flow through the nozzles formed in the plate; and
FIG. 6 is an enlarged view of a portion of the arrangement of FIG. 5.

### Description of the Preferred Embodiments

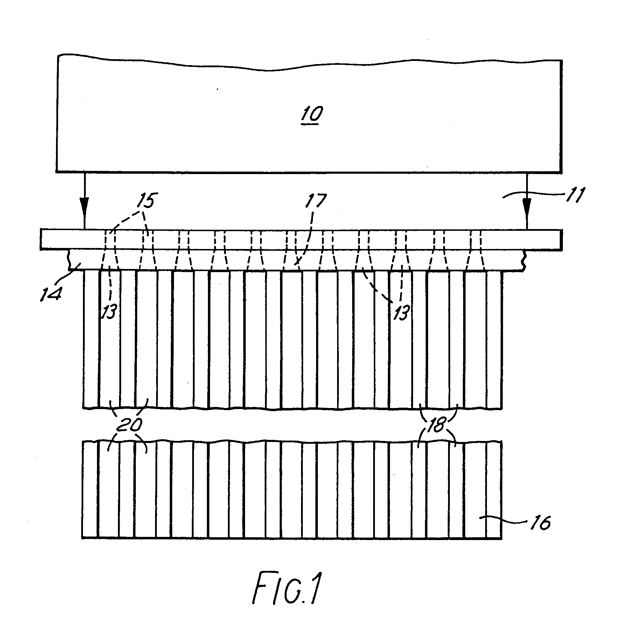

Referring to FIG. 1, reference numeral 16 identifies an ink jet printhead, such as a drop-on-demand ink jet printhead of the type fully disclosed in the copending cross-referenced applications. While the present invention has particular utility in connection with such printheads, printheads of other construction and operation may also benefit by the teachings of the invention. With further reference to FIG. 1, printhead 16 comprises a plurality of spaced elongate ink cavities or channels 20 separated by a plurality of elongate actuating walls 18. As explained fully in the copending applications, actuating walls 18 are operable in shear mode in response to applied electrical signals for imparting pressure pulses to the ink in channels 20 for causing ejection of ink droplets through a plurality of nozzles 13, each of the nozzles being in communication with a respective ink channel 20.

According to the invention, nozzles 13 are formed in a solid nozzle plate 14 which is bonded to printhead 16. Nozzle formation may take place prior to the bonding of nozzle plate 14 to printhead 16 or after it has been bonded thereto. In either case, to facilitate the manufacturing process, a contact mask 12 having a plurality of spaced apertures 15 is secured to the external surface of nozzle plate 14. Apertures 15, each of which defines the periphery of a respective nozzle exit on the external surface of nozzle plate 14, are arranged to couple ultraviolet (UV) radiation from a source 10 onto nozzle plate 14 to form nozzles 13. More particularly, source 10 preferably comprises an excimer laser which generates and applies a uniform collimated or parallel beam 11 of UV light of appropriate energy density per pulse onto contact mask 12. Apertures 15 of of contact mask 12 expose nozzle plate 14 to the UV radiation thereby ablating the regions of the nozzle plate underlying the apertures, thus forming nozzles 13 through nozzle plate 14. In this manner, contact mask 12 provides for the concurrent exposure and formation of a line array of nozzles. By forming nozzles 13 after nozzle plate 14 is bonded to printhead 16, alignment of each nozzle 13 with a respective ink channel 20 of printhead 16 can be precisely controlled.

The material of which nozzle plate 14 is made is preferably a plastic or polymer whose surface energy after ablation has a high contact angle to and is thereby wetted by the ink solvent supplied from ink ejection channels 20. In particular, the material comprising nozzle plate 14 should have a surface energy after ablation exceeding that of the ink solvent. This permits for the efficient transfer of ink solvent from the ink channels 20 into the bores of nozzles 13. It is also advantageous to make nozzle plate 14 out of plastic since the threshold energy density required for ablation of plastic is relatively low. Suitable plastic materials, which are not attacked by the ink solvent may be selected from, for example, polyester terepthalate, polyimide, polyetherimide, polyethersulphone, polyetherketone, polycarbonate and cellulose acetate. The nozzle plate 14 may also comprise a solid material such as glass or metal, in which event the required ablation energy density is greater and ablation may have to be carried out in a vacuum.

As previously described, the nozzle plate 14 shown in FIG. 1 is bonded to an ink jet printhead 16, in particular a drop-on-demand printhead. The technique illustrated in the drawing of forming multiple nozzles 13 after the nozzle plate 14 is assembled and bonded to printhead 16 achieves a number of advantages. First, the axis 17 of each nozzle 13, which controls the relative direction of each ink jet, is very precisely controlled, being solely a function of the configuration of mask 12 and the uniformity of intensity and direction of the axis of collimation of the optical beam. Although, in accordance with the invention, nozzle plate 14 may be formed as a separate component before assembly, the subsequent process of locating and bonding the plate to printhead 16 may introduce some geometric variations in the axial direction between jets produced by nozzles 13. Also, the risk of causing nozzle blockage during the bonding of nozzle plate 14 is substantially avoided by ablating nozzles 13 after assembly and bonding of the nozzle plate.

An inherent feature of excimer laser ablation of plastics is that the walls of a structure ablated in plastic are found not to be parallel to the incident light beam, but rather taper inward. Typically, with energy levels appropriate for ablating plastic nozzle plate 14, a taper of about 5 degrees is obtained. This gradually reduces the section of the ablated structure from the working face. It is, however, advantageous for ink jet nozzles to be tapered in the opposite direction, being smaller in area at the exit end than at the inlet end. A nozzle which is tapered with its area increasing towards the outlet face, such as that naturally produced by laser ablation, is therefore considered undesirable. This disadvantage is overcome according to the present invention by rocking the assembly comprising printhead 16, nozzle plate 14 bonded thereto and adjacent contact mask 12 (or a suitable fixture holding nozzle plate 14 and contact mask 12) during nozzle ablation. In this manner, nozzles 13 are so formed as to have enlarged ink inlets without enlarging the nozzle exit at the same time.

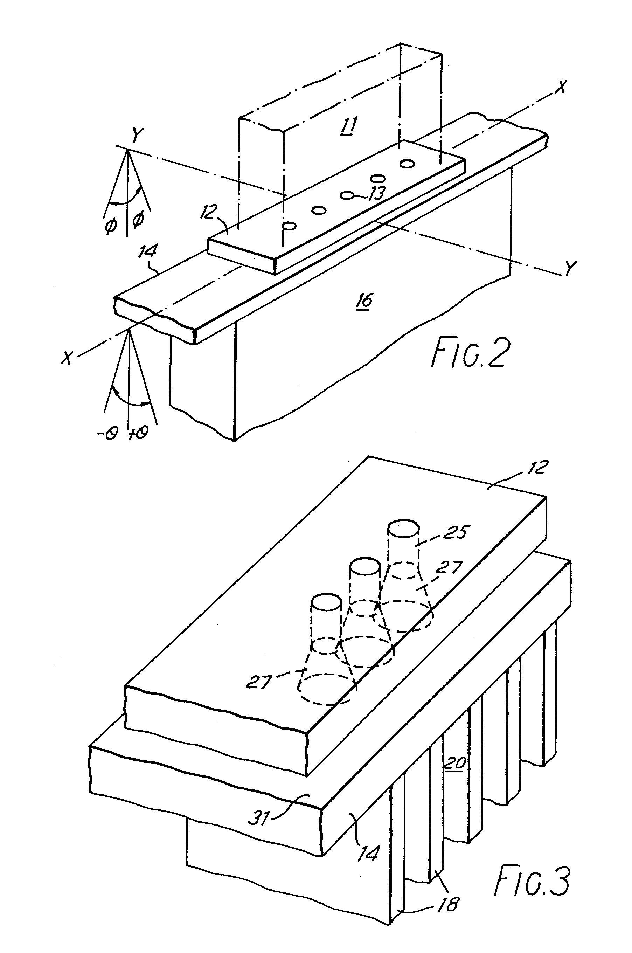

The method of rocking the assembly to undercut nozzles 13 is illustrated in FIG. 2. As shown in the drawing, the assembly comprising printhead 16, nozzle plate 14 and contact mask 12 can be rocked through either of the mutually perpendicular X or Y axes or can be simultaneously rocked about both axes. In particular, the assembly is preferably pivotally moved in simple harmonic motion about the respective axes, which are disposed in or substantially in a plane of plate 14 facing towards beam 11. In one embodiment of the invention, the assembly is rocked unequally about the X and Y axes so that a substantially circular exit hole 25 (see FIG. 3) exposed by a circular mask aperture 17 results in an elliptical, oblate or rectangular entry shape 27 whose major axis is in alignment with actuating walls 18 of printhead 16. It is particularly suitable when forming a line of nozzles 13 to rotate the assembly through a large angle of approximately +/- 30-40 degrees about the X axis joining the line of nozzles 13, and to rotate the assembly through a smaller angle of approximately +/- 10-20 degrees about the Y axis normal to the line of nozzles 13. This advantageously results in a nozzle 13 having an inlet shape 27 substantially larger in area than the nozzle exit 25 and permits closer spacing of adjacent nozzles 13 by matching the nozzle entry shape 27 to the channel profile of printhead 16.

Another advantage of rocking and undercutting nozzles 13, particularly in a drop-on-demand printer, so that the nozzle is tapered towards the exit face, is that the nozzle volume is increased compared with a nozzle that is not tapered by rocking during manufacture or one that has a parallel bore. By making the nozzle volume in excess of one drop volume of the drop size to be produced by the drop-on-demand printer in a comparatively thin nozzle plate, the probability of sucking air from outside the nozzle plate into ink cavity 20 behind the nozzle plate is substantially reduced during operation of the printer.

A further advantage of forming a nozzle tapered towards the exit, is that the inertance of the fluid mass in the nozzle, which is the factor controlling the rise time of the ink jet velocity in response to a pressure pulse, is reduced by a substantial factor. The viscous impedance or reactance of the nozzle which tends to reduce the ink flow velocity is similarly reduced by increasing the inlet area. As a consequence, a more viscous ink can be tolerated without excessive nozzle impedance.

As mentioned above, a particular benefit of rocking the printhead assembly by a greater angle about the X than the Y nozzle axis is that nozzles and printhead ink channels can be placed more tightly together while leaving thin actuating walls 18 between adjacent ink channels behind the nozzles. By rocking each axis at appropriately selected frequencies a rectangular entry profile derived from a Lissajous envelope is produced. The oblate entry profile also provides for a higher surface tension pressure drawing the ink forward to the nozzle exit and so assisting with ink replenishment.

An assembly of undercut nozzles 13 made as described above is illustrated diagrammatically in FIG. 3. The action of the laser ablation process, particularly on a plastic material, in the nozzle bore surface makes the bore surface of higher surface energy or more positively wetting to the ink in nozzle 13. The high surface energy assists to urge the ink meniscus towards the nozzle exit face 25, thereby increasing ink drop acceleration and facilitating ink replenishment. Nozzle plate 14 may also be coated on its external face with a film or layer 31 of low surface energy material, such as fluoropolmer, prior to ablation. The film of low surface energy is known to prevent the spread of ink over the external face of nozzle plate 14 which assists to hold the ink drop size constant at different drop formation velocities and frequencies.

A line array of nozzles 13 can be exposed and formed in parallel on printhead 16 in a single operation. Also, a stack of array printheads 16 can be bonded to a common nozzle plate 14 for nozzle manufacture. Nozzles 13 are formed by mask 12 in locations which depend on the mask accuracy and do not depend on the accuracy of the assembly of the individual array printheads 16 of the stack one to another.

Nozzles 13 formed in nozzle plate 14 in one array need not necessarily be collinear. It may, for example, be advantageous to alternate nozzles 13 above and below the X-X axis, to compensate for a delay in the time of drop ejection, in the case where drops are ejected alternately from adjacent ink channels 20 of a shared actuator array printhead.

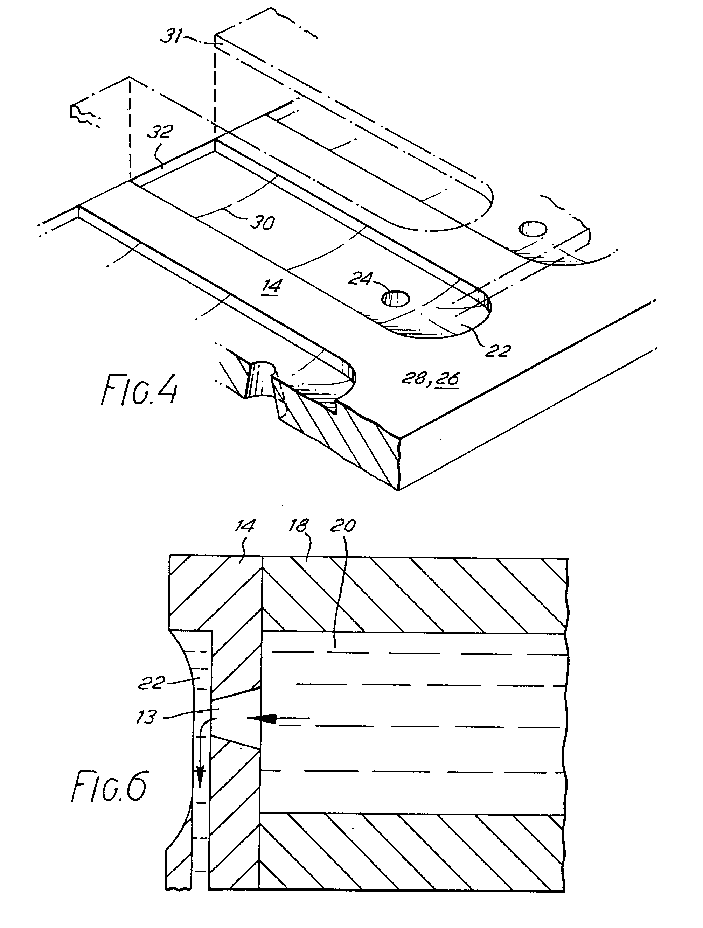

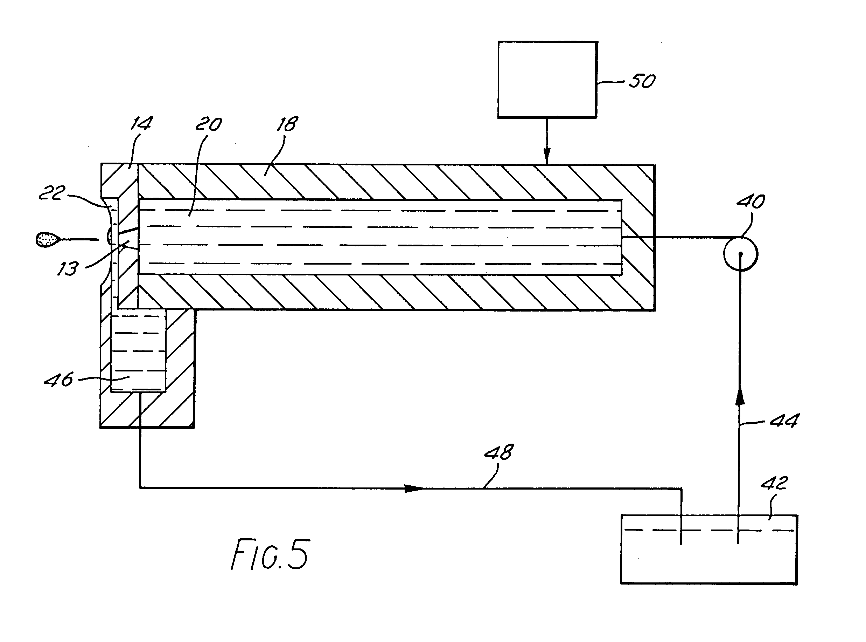

A further structure for holding ink on the outer face of nozzle plate 14, also made by laser ablation, is illustrated in FIGS. 4-6. In particular, a shallow trough 22 is cut by laser ablation in the exit surface 26 of nozzle plate 14 in a region covering a nozzle 24. A contact mask 31 (shown in exploded view in FIG. 4) is preferably used in the laser ablation process, which is generally similar to the process used in forming nozzles 13, although no rocking is employed. Also, exit surface 26 of nozzle plate 14 is preferably coated with a non-wetting film 28. The nozzle plate material in trough 22 after ablating the exit surface 26 is, however, hydro-philic, so that ink is attracted to form a meniscus 30 over the trough region covering nozzle 24. Ink is supplied to the troughs from an ink supply 32. The pressure of the supplied ink controls the level of the ink meniscus 30 in trough 22. Preferably, meniscus 30 is controlled so that the depth of the ink in trough 22 is one to two nozzle diameters.

The formation of ink meniscus 30 external to nozzle 24 has a number of advantages. Initially, maintaining ink external to nozzle 24 inhibits the withdrawal of air bubbles into ink channel 20 behind the nozzle. Secondly, the construction of trough 22 controls the thickness of the ink film external to nozzle 24. Such a film should be thin to maximize the acceleration of an ink drop ejected through the film from nozzle 24. In the ink trough arrangement, the ink supply 32 is available to admit ink to maintain the quantity of ink in trough 22 constant as successive ink drops are ejected by printhead 16. In one embodiment (FIG. 4), ink is provided only from the supply source 32 in front of nozzle plate 14 and no net flow of ink occurs through nozzle 24 or into the ink channel 20 behind nozzle 24 from a rear replenishment source.

In a further embodiment (see FIGS. 5-6), ink is supplied steadily into the ink channel 20 behind nozzle 24 by a pump 40 connected to an ink supply 42 by a line 44. The ink flows at a steady velocity, preferably 2.5-4.0 meters/second, through the nozzle into trough 22 formed in the front surface of the nozzle plate. The ink is then withdrawn from troughs 22 to an ink collection chamber 46 common to the troughs and returned to the supply by a line 48. This positive flow of ink through nozzle 24 has a number of advantages. The ink is more easily ejected since it has a positive flow velocity in the nozzles. A printer having ink flow of this type consequently may use an excitation source 50 operating at relatively low power to effect drop ejection. Another advantage is that ink is constantly being renewed in front of nozzle 24 and thereby has a greatly reduced tendency to form a dry film and thus inhibit ink drop ejection.

Nozzle plates of the type described above are readily manufactured in a plastic material by means of laser ablation. To make such a construction a double mask is required. The first mask is designed to expose the trough region external to each nozzle, where a depth of about 0.2-2 nozzle diameters is removed by laser ablation. A second mask is then interposed and the nozzle is then cut as previously described. Rocking of the assembly may also be effected to undercut the nozzle profiles. The wetting characteristic of the ablated surface in the trough, and the non-wetting characteristic of the unablated areas external to the trough serve to hold ink in a controlled manner external to the nozzle.

With the invention, a very convenient and accurate method for manufacturing nozzles for an ink jet printer is made available.

## Claims

1. A method of making a nozzle plate for an ink jet printhead comprising directing a high energy beam at a plate and effecting relative rocking motion between said plate and said beam thereby to form a nozzle in said plate which tapers in a direction opposed to that of said beam.

2. The method of Claim 1, wherein said rocking step comprises effecting relative rocking motion about each of two mutually inclined axes so that said nozzle is formed with one end thereof of larger cross-section and with a predetermined shape.

3. The method of Claim 2 including disposing said axes mutually at right angles.

4. The method of Claim 3, wherein said rocking step comprises effecting said rocking motion by holding said beam stationary and pivotally moving said plate in simple harmonic motion about said respective axes disposed in or substantially in a plane surface of said plate facing towards said beam,

5. The method of Claim 4 including forming said plate with a polymer material.

6. The method of Claim 5 including employing an excimer laser as said high energy beam.

7. The method of Claim 4 including securing a masking means in overlying contact with said plate to limit incidence on said plate of said beam to locations at which said nozzles are to be formed.

8. The method of Claim 1, including providing said plate in a polymer material and, prior to forming said nozzle, mounting said plate on an ink jet printhead body so as to close an end of an ink channel in said body, said nozzle being formed to communicate with said channel.

9. The method of Claim 8, wherein said ink channel is a rectilinear channel, and including directing said beam at said plate along the axis of said channel to form said nozzle.

10. The method of Claim 8 including limiting the incidence on said plate of said beam to a plurality of locations at each of which a respective nozzle is to be formed and effecting relative rocking motion between said beam and said plate so as to simultaneously form a plurality of nozzles of tapering form.

11. The method of Claim 10 including spacing said locations in a row and effecting said relative rocking motion so that at the side of the nozzle plate at which said nozzles have the larger cross-sectional area, said nozzles are formed with a first dimension in the direction of the spacing of said nozzle axes and with a second dimension perpendicular to and greater than said first dimension.

12. The method of Claim 11 including rocking said plate so as to form said nozzles with the ends thereof of greater cross-sectional area being of substantially rectangular form.

13. A method of making a nozzle plate for an ink jet printhead comprising directing a high energy beam at a plate to form a trough in said plate and, thereafter, directing said high energy beam at a location within said trough and effecting relative rocking motion between said plate and said beam thereby to form a nozzle in said trough which tapers in a direction opposed to that of said beam, the end of said nozzle opening into said trough being of smaller cross-sectional area than the opposite end of the nozzle.

14. The method of Claim 13 including employing first masking means to limit the incidence on said plate of said beam in forming said trough and employing second masking means to limit the incidence of said beam in forming said nozzles.

15. The method of Claim 14, wherein said rocking step comprises effecting said rocking motion by holding said beam stationary and pivotally moving said plate in simple harmonic motion about respective axes disposed in or substantially in a plane surface of said plate facing towards said beam.

16. The method of Claim 15 including providing said plate in a polymer material and, prior to forming said nozzle, mounting said plate on an ink jet printhead body so as to close an end of an ink channel in said body, said nozzle being formed to communicate with said channel.

17. A method of making a nozzle plate for an ink jet printhead comprising directing a high energy beam at a plate of polymer material secured to an end of an array of ink channels of an ink jet printhead body, limiting the incidence on said plate of said beam to a plurality of locations so as to simultaneously form respective nozzles in communication with said channels and effecting relative rocking motion between said beam and said printhead so that each of said nozzles tapers inwardly in the direction opposed to that of said beam.

18. A nozzle plate (14) for an ink jet printhead formed with a nozzle (13) therein having an inlet at one face of said plate and an outlet of smaller cross-sectional area than said inlet at a face of said plate opposite that in which said nozzle inlet is disposed, said nozzle further having a nozzle bore which converges from said inlet to said outlet, characterized in that said nozzle plate is formed from polymer and said nozzle bore is formed by a high energy beam directed at the face of said plate in which said outlet is disposed whilst effecting relative rocking motion between said plate and said beam.

19. A nozzle plate as claimed in Claim 18 and in which said plate is formed with a row of nozzles therein having respective inlets disposed in a face of said plate which when said plate is located on said printhead faces said printhead, respective outlets which are of smaller cross-sectional area than said inlets and are disposed in a face of said plate opposite that in which said inlets are disposed and respective nozzle bores between said inlets and said outlets which converge each from the inlet to the outlet thereof, characterized in that said nozzle bores are formed by directing a high energy beam at said face of said plate in which said outlets are formed while effecting relative rocking motion between said beam and said plate.

20. The nozzle plate as claimed in Claim 18 or Claim 19, characterized in that said nozzle or said nozzles each have an inlet of substantially rectangular cross-section.

21. The nozzle plate as claimed in any of Claims 18 to 20, characterized in that the or each of said nozzle bores are formed by and have increased surface energy imparted thereto by an excimer laser.

22. The nozzle plate as claimed in any one of Claims 18 to 21, characterized in that the inlet of the or each of said nozzles is of substantially rectangular shape and is formed by simple harmonic rocking motion of said plate relative to said beam about two mutually perpendicular axes, a first dimension of each of said inlets in the direction of the row of nozzles being less than a second dimension thereof perpendicular to said row.

23. A drop-on-demand ink jet printhead comprising a printhead body (16) formed with an ink channel (20), a nozzle plate (14) secured to said body and a nozzle (13) formed in said nozzle plate and having an inlet in a face of said plate adjacent said body and an outlet of smaller cross-section than said inlet disposed in a face of said plate opposite the face in which said inlet is disposed, said nozzle further having a nozzle bore which converges from said inlet to said outlet, characterized in that said nozzle plate is formed from polymer and said nozzle bore is formed by directing a high energy beam at said plate and effecting relative rocking motion between said beam and said plate.

24. A drop-on-demand ink jet printhead as claimed in Claim 23, comprising a printhead body (16), a nozzle plate (14) formed with a row of nozzles (13) secured to said body and an array of ink channels (20) in said body respectively communicating with said nozzles, each of said nozzles having an inlet in a face of said plate adjacent said body, an outlet of smaller cross-section than the inlet thereof in a face of said plate opposite the face in which said inlets are disposed and a nozzle bore which converges from the nozzle inlet to the nozzle outlet, characterised in that said bores are formed in said plate by directing a high energy beam at the face of said plate in which said outlets are disposed whilst effecting relative rocking motion between said plate and said beam.

25. The printhead of Claim 23 or Claim 24, characterized in that the inlet of each of said nozzles is of substantially rectangular shape and is formed by simple harmonic rocking motion of said plate relative to said beam about two mutually perpendicular axes, a first dimension of each of said inlets in the direction of the row of nozzles being less than a second dimension thereof perpendicular to the row.

26. The printhead as claimed in any one of Claims 23 to 25, characterized in that the or each of said nozzle bores is formed by and have increased surface energy imparted thereto by an excimer laser.

## Patentansprüche

1. Verfahren zur Herstellung einer Düsenplatte für einen Tintenstrahldruckkopf, wonach ein Hochenergiestrahl auf eine Platte gelenkt wird und eine relative Rüttelbewegung zwischen der Platte und dem Strahl bewirkt wird, um dadurch eine Düse in der Platte auszubilden, die sich in einer Richtung entgegengesetzt zu derjenigen des Strahls verjüngt bzw. konisch verläuft.

2. Verfahren nach Anspruch 1, wonach der Rüttelschritt das Bewirken einer relativen Rüttelbewegung um jede von zwei zueinander geneigt verlaufenden Achsen umfaßt, so daß die Düse so ausgebildet wird, daß ein Ende derselben einen größeren Querschnitt hat und eine vorbestimmte Gestalt hat.

3. Verfahren nach Anspruch 2, wonach die Achsen zueinander in rechten Winkeln verlaufend angeordnet sind.

4. Verfahren nach Anspruch 3, wonach der Rüttelschritt das Bewirken einer Rüttelbewegung umfaßt, indem der Strahl stationär gehalten wird und die Platte in einer Schwenkbewegung gemäß einer einfachen harmonischen Bewegung um die jeweiligen Achsen bewegt wird, die in oder im wesentlichen in einer ebenen Fläche bzw. Oberfläche der Platte angeordnet sind, welche zum Strahl hinweist.

5. Verfahren nach Anspruch 4, wonach die Platte aus einem Polymermaterial hergestellt wird.

6. Verfahren nach Anspruch 5, wonach ein Excimer-Laser als Hochenergiestrahl verwendet wird.

7. Verfahren nach Anspruch 4, wonach eine Maskierungseinrichtung in einer überdeckenden Berührung auf der Platte befestigt wird, um das Einfallen des Strahls auf die Platte auf Stellen oder Bereiche zu begrenzen, bei denen die Düsen auszubilden sind.

8. Verfahren nach Anspruch 1, wonach die Platte aus einem Polymermaterial hergestellt wird und vor der Ausbildung der Düse die Platte an einem Tintenstrahldruckkopfkörper befestigt wird, derart, daß ein Ende eines Tintenkanals in dem Körper verschlossen wird, wobei die Düse so ausgebildet wird, daß sie mit dem Kanal kommuniziert.

9. Verfahren nach Anspruch 8, wonach der Tintenkanal aus einem geradlinigen Kanal besteht und wonach der Strahl auf die Platte entlang der Achse des Kanals gerichtet wird, um die Düse auszubilden.

10. Verfahren nach Anspruch 8, wonach der Einfallbereich des Strahls auf die Platte auf eine Vielzahl von Stellen begrenzt wird, wobei an jeder dieser Stellen eine jeweilige Düse auszubilden ist, und wobei eine relative Rüttelbewegung zwischen dem Strahl und der Platte erzeugt wird, um gleichzeitig eine Vielzahl der Düsen mit der spitz zulaufenden Form auszubilden.

11. Verfahren nach Anspruch 10, wonach die Stellen in einer Reihe beabstanded angeordnet werden und die relative Rüttelbewegung derart bewirkt wird, daß die Seite der Düsenplatte, bei welcher die Düsen die größere Querschnittsfläche haben, die Düsen mit einem ersten Maß in der Richtung der Beabstandung der Düsenachsen ausgebildet werden und mit einem zweiten Maß senkrecht zu dem ersten Maß und größer als das erste Maß ausgebildet werden.

12. Verfahren nach Anspruch 11, wonach die Platte so gerüttelt wird, daß die Düsen an den Enden, welche die größere Querschnittsfläche haben, eine im wesentlichen rechteckige Form erhalten.

13. Verfahren zur Herstellung einer Düsenplatte für einen Tintenstrahldruckkopf, wonach ein Hochenergiestrahl auf eine Platte gelenkt wird, um in der Platte einen Trog auszubilden und danach der Hochenergiestrahl auf eine Stelle innerhalb des Troges gerichtet wird und eine relative Rüttelbewegung zwischen der Platte und dem Strahl bewirkt wird, um dadurch eine Düse in dem Trog auszubilden, die in einer Richtung entgegengesetzt zu derjenigen des Strahles spitz zuverläuft bzw. konisch verläuft, wobei das Ende der Düse, welches in dem Trog mündet, die kleinere Querschnittsfläche als das gegenüberliegende Ende der Düse hat.

14. Verfahren nach Anspruch 13, wonach eine erste Maskierungseinrichtung verwendet wird, um den Einfall des Strahls auf die Platte bei der Herstellung des Trogs zu begrenzen und daß eine zweite Maskierungseinrichtung verwendet wird, um den Einfall des Strahls bei der Ausbildung der Düse zu begrenzen.

15. Verfahren nach Anspruch 14, wonach der Rüttelschritt das Bewirken einer Rüttelbewegung durch Festhalten des Strahls in stationärer Lage und Ausführen einer Schwenkbewegung der Platte in Form einer einfachen harmonischen Bewegung um die jeweiligen Achsen umfaßt, die in oder im wesentlichen in einer ebenen Fläche bzw. Oberfläche der Platte angeordnet sind, welche zu dem Strahl hinweist.

16. Verfahren nach Anspruch 15, wonach die Platte aus einem Polymermaterial hergestellt wird und vor der Ausbildung der Düse diese Platte an einem Tintenstrahldruckkopfkörper befestigt wird, um ein Ende eines Tintenkanals in dem Körper zu verschließen, wobei die Düse so ausgebildet wird, daß sie mit dem Kanal strömungsmäßig verbunden ist.

17. Verfahren zur Herstellung einer Düsenplatte für einen Tintenstrahldruckkopf, wonach ein Hochenergiestrahl auf eine Platte aus einem Polymermaterial gelenkt wird, welche an dem Ende einer Anordnung von Tintenkanälen eines Tintenstrahldruckkopfkörpers befestigt ist, das Einfallen des Strahls auf die Platte auf eine Vielzahl von Stellen begrenzt wird, so daß gleichzeitig jeweilige Düsen ausgebildet werden, die in Strömungsverbindung mit den Kanälen stehen und wonach eine relative Rüttelbewegung zwischen dem Strahl und dem Druckkopf bewirkt wird, so daß jede der Düsen nach innen in einer Richtung entgegengesetzt derjenigen des Strahls spitz zuverläuft bzw. konisch verläuft.

18. Düsenplatte (14) für einen Tintenstrahldruckkopf, die mit einer Düse (13) versehen ist, welche an einer Fläche der Platte einen Einlaß hat und an einer Fläche der Platte, welche derjenigen mit dem Düseneinlaß gegenüberliegt, einen Auslaß mit einer kleineren Querschnittsfläche als der Einlaß hat, wobei die Düse eine Düsenbohrung aufweist, die vom Einlaß zum Auslaß hin konvergiert,
dadurch **gekennzeichnet,** daß die Düsenplatte aus einem Polymer hergestellt ist und daß die Düsenbohrung durch einen Hochenergiestrahl hergestellt ist, der auf die Fläche der Platte gelenkt wurde, in welcher der Auslaß angeordnet ist, wobei eine relative Rüttelbewegung zwischen der Platte und dem Strahl bewirkt wurde.

19. Düsenplatte nach Anspruch 18, bei welcher die Platte mit einer Reihe von Düsen ausgestattet ist, die jeweils Einlässe besitzen, welche in einer Fläche der Platte gelegen sind, die, wenn die Platte an dem Druckkopf angeordnet ist, zu dem Druckkopf hinweisen, und die jeweilige Auslässe mit kleinerer Querschnittsfläche als die Einlässe haben und in einer Fläche der Platte angeordnet sind, die derjenigen gegenüberliegt, in welcher die Einlässe angeordnet sind und wobei jeweilige Düsenbohrungen zwischen den Einlässen und Auslässen vorhanden sind, die jeweils vom Einlaß zum Auslaß hin konvergieren,
dadurch **gekennzeichnet,** daß die Düsenbohrungen dadurch hergestellt sind, indem ein Hochenergiestrahl auf die Fläche der Platte gelenkt wurde, in welcher die Auslässe ausgebildet sind, während eine relative Rüttelbewegung zwischen dem Strahl und der Platte bewirkt wurde.

20. Düsenplatte nach Anspruch 18 oder 19,
dadurch **gekennzeichnet,** daß die Düse oder die Düsen jeweils einen Einlaß mit im wesentlichen rechteckigem Querschnitt haben.

21. Düsenplatte nach einem der Ansprüche 18 bis 20,
dadurch **gekennzeichnet,** daß die oder jede der Düsenbohrungen dadurch ausgebildet sind, indem eine erhöhte Oberflächenenergie auf diese durch einen Excimer Laser aufgebracht wurde.

22. Düsenplatte nach einem der Ansprüche 18 bis 21,
dadurch **gekennzeichnet,** daß der Einlaß der oder jeder der Düsen eine im wesentlichen rechteckige Gestalt hat und dadurch ausgebildet wurde, indem eine einfache harmonische Rüttelbewegung der Platte relativ zum Strahl um zwei zueinander senkrechte Achsen ausgeführt wurde, wobei ein erstes Abmaß jeder der Einlässe in der Richtung der Reihe der Düsen kleiner ist als ein zweites Abmaß derselben senkrecht zu der Reihe.

23. Ein-Tropfen-bei-Bedarf-Tintenstrahldruckkopf, mit einem Druckkopfkörper (16), der mit einem Tintenkanal (20), einer an dem Körper befestigten Düsenplatte (14) und einer Düse (13), die in der Düsenplatte ausgebildet ist, ausgestattet ist und einen Einlaß in einer Fläche der Platte nahe dem Körper aufweist und einen Auslaß mit kleinerem Querschnitt als der Einlaß aufweist, welcher in einer Fläche der Platte gegenüber der Fläche, in welcher der Einlaß angeordnet ist, gelegen ist, wobei die Düse ferner eine Düsenbohrung besitzt, die vom Einlaß zum Auslaß hin konvergiert,
dadurch **gekennzeichnet,** daß die Düsenplatte aus einem Polymer hergestellt ist und daß die Düsenbohrung dadurch ausgebildet wurde, indem ein Hochenergiestrahl auf die Platte gelenkt wurde und eine relative Rüttelbewegung zwischen dem Strahl und der Platte bewirkt wurde.

24. Tropfen-bei-Bedarf-Tintenstrahldruckkopf nach Anspruch 23, mit einem Druckkopfkörper (16), einer Düsenplatte (14), die mit einer Reihe von Düsen (13) ausgestattet ist und an dem Körper befestigt ist, und mit einer Anordnung von Tintenkanälen (20) in dem Körper, die jeweils mit den Düsen strömungsmäßig verbunden sind, wobei jede der Düsen einen Einlaß in einer Fläche der Platte benachbart dem Körper aufweist und einen Auslaß mit kleinerem Querschnitt als der Einlaß in einer Fläche der Platte aufweist, welche der Fläche gegenüberliegt, in welcher die Einlässe angeordnet sind, und eine Düsenbohrung besitzt, die von dem Düseneinlaß zu dem Düsenauslaß hin konvergiert,
dadurch **gekennzeichnet,** daß die Bohrungen in der Platte dadurch ausgebildet sind, indem ein Hochenergiestrahl auf die Fläche der Platte gelenkt wurde, in welcher die Auslässe angeordnet sind, wobei dabei eine relative Rüttelbewegung zwischen der Platte und dem Strahl bewirkt wurde.

25. Druckkopf nach Anspruch 23 oder 24,
dadurch **gekennzeichnet,** daß der Einlaß jeder der Düsen eine im wesentlichen rechteckförmige Gestalt hat und dadurch ausgebildet wurde, indem eine einfache harmonische Rüttelbewegung der Platte relativ zu dem Strahl um zwei zueinander senkrechte Achsen ausgeführt wurde, wobei ein erstes Abmaß jeder der Einlässe in der Richtung der Reihe der Düsen kleiner ist als ein zweites Abmaß derselben senkrecht zu der Reihe.

26. Druckkopf nach einem der Ansprüche 23 bis 25,
dadurch **gekennzeichnet,** daß die oder jede der Düsenbohrungen durch eine erhöhte Oberflächenenergie ausgebildet sind, die mit Hilfe eines Excimer Lasers darauf aufgebracht wurde.

## Revendications

1. Procédé pour fabriquer une plaque à buses pour une tête d'impression à jet d'encre, consistant à projeter un faisceau de haute énergie sur une plaque et à produire un mouvement relatif d'oscillation entre ladite plaque et ledit faisceau de manière à former, dans ladite plaque, une buse, qui se rétrécit dans une direction opposée à celle dudit faisceau.

2. Procédé selon la revendication 1, selon lequel ladite étape d'oscillation consiste à exécuter un mouvement d'oscillation relatif autour de chacun de deux axes inclinés l'un par rapport à l'autre de manière à former ladite buse de telle sorte que l'une de ses extrémités possède une section transversale plus étendue et une forme prédéterminée.

3. Procédé selon la revendication 2, incluant le fait de disposer lesdits axes lesdits axes réciproquement à angle droit.

4. Procédé selon la revendication 3, selon lequel ladite étape d'oscillation consiste à exécuter ledit mouvement d'oscillation en maintenant fixe ledit faisceau et en déplaçant selon un mouvement de pivotement ladite plaque selon un simple déplacement harmonique autour desdits axes respectifs disposés dans ou sensiblement dans une surface plane de ladite plaque tournée vers ledit faisceau.

5. Procédé selon la revendication 4, incluant la réalisation dudit axe avec un matériau polymérique.

6. Procédé selon la revendication 5, incluant l'utilisation d'un laser excimère pour former ledit faisceau de haute énergie.

7. Procédé selon la revendication 4, incluant la fixation des moyens de masquage en superposition et en contact avec ladite plaque afin de limiter l'incidence dudit faisceau sur ladite plaque en des emplacements auxquels lesdites buses doivent être formées.

8. Procédé selon la revendication 1, incluant la réalisation de ladite plaque en un matériau polymérique et, avant la formation de ladite buse, de monter ladite plaque sur un corps de tête d'impression à jet d'encre de manière à fermer une extrémité d'un canal d'adduction d'encre dans ledit corps, ladite buse étant formée de manière à communiquer avec ledit canal.

9. Procédé selon la revendication 8, selon lequel ledit canal d'adduction d'encre est un canal rectiligne, et incluant le fait de diriger ledit faisceau sur ladite plaque le long de l'axe dudit canal pour former ladite buse.

10. Procédé salon la revendication 8, comprenant la limitation de l'incidence dudit faisceau sur ladite plaque-à une pluralité d'emplacements, dans chacun desquels une buse respective doit être formée et exécuter un mouvement d'oscillation relatif entre ledit faisceau et ladite plaque afin de former simultanément une pluralité de buses ayant une forme rétrécie.

11. Procédé selon la revendication 10, comprenant un espacement desdits emplacements suivant une rangée et d'exécuter ledit mouvement d'oscillation relatif de manière que sur le côté de la plaque à buses, sur lequel lesdites buses possèdent la surface en coupe transversale la plus grande, lesdites buses sont formées avec une première dimension dans la direction de l'espacement desdits axes des buses et avec une seconde dimension perpendiculaire et supérieure à ladite première dimension.

12. Procédé selon la revendication 11, comprenant le fait de faire osciller ladite plaque de manière à former lesdites buses dont les extrémités possédant la surface en coupe transversale la plus grande possèdent une forme sensiblement rectangulaire.

13. Procédé pour fabriquer une plaque à buses pour une tête d'impression à jet d'encre consistant à diriger un faisceau de haute énergie sur une plaque de manière à former un évidement dans ladite plaque, puis de diriger ledit faisceau de haute énergie en un emplacement situé dans ledit évidement et à produire un mouvement relatif d'oscillation entre ladite plaque et ledit faisceau de manière à former dans ledit évidement une buse qui se rétrécit dans une direction opposée à celle dudit faisceau, l'extrémité de ladite buse débouchant dans ledit évidement possédant une surface en coupe transversale plus petite que l'extrémité opposée de la buse.

14. Procédé selon la revendication 13, comprenant l'utilisation des premiers moyens de masquage pour limiter l'incidence dudit faisceau sur ladite plaque lors de la formation de ladite cavité et l'utilisation des seconds moyens- de masquage pour limiter l'incidence dudit faisceau lors de la formation desdites buses.

15. Procédé selon la revendication 14, selon lequel ladite étape d'oscillation consiste à produire ledit mouvement d'oscillation en maintenant fixe ledit faisceau et en faisant pivoter ladite plaque selon un simple déplacement harmonique autour d'axes respectifs disposés dans ou sensiblement dans une surface plane de ladite plaque, tournée vers ledit faisceau.

16. Procédé selon la revendication 15, incluant la réalisation de ladite plaque en un matériau polymérique et, avant la formation de ladite buse, le montage de ladite plaque sur un corps de tête d'impression à jet d'encre de manière à fermer une extrémité d'un canal d'adduction d'encre dans ledit corps, ladite buse étant formée de manière à communiquer avec ledit canal.

17. Procédé pour fabriquer une plaque à buse pour une tête d'impression à jet d'encre, consistant à diriger un faisceau de haute énergie sur une plaque formée d'un matériau polymérique, fixée à une extrémité d'un réseau de canaux d'adduction d'encre d'un corps d'une tête d'impression à jet d'encre, à limiter l'application dudit faisceau à ladite plaque à une pluralité d'emplacements de manière à former simultanément des buses respectives en communication avec lesdits canaux et d'exécuter un mouvement relatif d'oscillation entre ledit faisceau et ladite tête d'impression de telle sorte que chacune desdites buses se rétrécit vers l'intérieur dans la direction opposée à celle dudit faisceau.

18. Plaque à buses (14) pour une tête d'impression à jet d'encre, dans laquelle est formée une buse (13) possédant une entrée débouchant dans une face de ladite plaque et une sortie possédant une surface en coupe transversale inférieure à celle de ladite entrée dans une face de ladite plaque, opposée à celle dans laquelle est disposée ladite entrée de la buse, ladite buse comportant en outre un perçage qui converge depuis ladite entrée en direction de ladite sortie, caractérisée en ce que ladite plaque à buse est réalisée en un polymère et que ledit perçage de la buse est formée au moyen d'un faisceau de haute énergie dirigée sur la face de ladite plaque, dans laquelle est disposée ladite sortie, tout en mettant en oeuvre un mouvement relatif d'oscillation entre ladite plaque et ledit faisceau.

19. Plaque à buses selon la revendication 18, dans laquelle ladite plaque comporte une rangée de buses dans laquelle sont ménagées des entrées respectives situées dans une face de ladite plaque, qui, lorsque ladite plaque est située sur ladite tête d'impression, est située en vis-à-vis de cette dernière, des sorties respectives, qui possèdent une surface en coupe transversale inférieure à celle desdites entrées et sont ménagées dans une face de ladite plaque située à l'opposé de celle dans laquelle lesdites entrées sont ménagées, et des perçages respectifs des buses situés entre lesdites entrées et lesdites sorties et qui convergent chacun depuis leur entrée en direction de leur sortie, caractérisée en ce que lesdits perçages des buses sont formés par envoi d'un faisceau de haute énergie sur ladite face de ladite plaque, dans laquelle lesdites sorties sont formées, tout en mettant en oeuvre un mouvement relatif d'oscillation entre ledit faisceau et ladite plaque.

20. Plaque à buses selon la revendication 18 ou 19, caractérisée en ce que la ou lesdites buses possèdent chacune une entrée possédant une section transversale sensiblement rectangulaire.

21. Plaque à buses selon l'une quelconque des revendications 18 à 20, caractérisée en ce que le ou chacun desdits perçages des buses sont formés par et reçoivent une énergie superficielle accrue de la part d'un laser excimère.

22. Plaque à buses selon l'une quelconque des revendications 18 à 21, caractérisée en ce que l'entrée de la ou chacune desdites buses possède une forme sensiblement rectangulaire et est formée au moyen d'un simple mouvement harmonique d'oscillation de ladite plaque par rapport audit faisceau autour de deux axes réciproquement perpendiculaires, une première dimension de chacune desdites entrées dans la direction de la rangée de buses étant inférieure à une seconde dimensions de ces entrées perpendiculairement à ladite rangée.

23. Plaque d'impression à jet d'encre pouvant être activée sur demande, comprenant un corps formant tête d'impression (16) pourvu d'un canal d'adduction d'encre (20), une plaque à buse (14) fixée audit corps et une buse (13) ménagée dans ladite plaque à buse et possédant une entrée située dans une face de ladite plaque adjacente audit corps et une sortie possédant une section transversale inférieure à ladite entrée et située dans une face de ladite plaque tournée à l'opposé de la face dans laquelle ladite entrée est située, ladite buse comportant en outre un perçage qui converge depuis ladite entrée en direction de ladite sortie, caractérisée en ce que ladite plaque à buse est réalisée en un polymère et que ledit perçage de la buse est formée par envoi d'un faisceau de haute énergie sur ladite plaque et par exécution d'un mouvement relatif d'oscillation entre ledit faisceau et ladite plaque.

24. Tête d'impression à jet d'encre pouvant être activée sur demande selon la revendication 23, comportant un corps de tête d'impression (16), une plaque à buses (14) pourvue d'une rangée de buses (13) fixée audit corps et un réseau de canaux d'adduction d'encre (20) situé dans ledit corps et communiquant respectivement avec lesdites buses, chacune desdites buses possédant une entrée située dans une face de ladite plaque adjacente audit corps, une sortie possédant une section transversale inférieure à l'entrée de la buse dans une face de ladite plaque située à l'opposé de la face dans laquelle lesdites entrées sont disposées, et un perçage de buse, qui converge depuis l'entrée de la buse en direction de la sortie de la buse, caractérisée en ce que lesdits perçages sont formés dans ladite plaque par envoi d'un faisceau de haute énergie sur la face de ladite plaque, dans laquelle lesdites sorties sont disposées, tout en exécutant un mouvement relatif d'oscillation entre ladite plaque et ledit faisceau.

25. Tête d'impression selon la revendication 23 ou 24, caractérisée en ce que l'entrée de chacune desdites buses possède une forme sensiblement rectangulaire et est formée au moyen d'un simple mouvement harmonique d'oscillation de ladite plaque par rapport audit faisceau autour des deux axes réciproquement perpendiculaires, une première dimension de chacune desdites entrées dans la direction de la rangée de buses étant inférieure à une seconde dimension de cette entrée perpendiculairement à la rangée.

26. Tête d'impression selon l'une quelconque des revendications 23 à 25, caractérisée en ce que le ou chacun desdits perçages des buses est formé par et reçoit une énergie superficielle accrue de la part d'un laser excimère.
